# EUROPEAN PATENT APPLICATION

(11) **EP 4 706 840 A1**
(43) Date of publication of application: **11.03.2026**
(21) Application number: 24843391.4
(22) Date of filing: 08.07.2024
(51) Int. Cl.: B21B 13/14, B21B 45/02, B08B 3/08, B08B 1/14, B08B 1/20

(54) **APPARATUS FOR CLEANING ROLLING ROLLER**

(30) Priority: 14.07.2023 KR 20230091884; 05.07.2024 KR 20240089059
(71) Applicant: LG Energy Solution, Ltd., Seoul 07335 (KR)
(72) Inventor: CHOI, Jaehyuk, Daejeon 34122 (KR); SHIN, Gichang, Daejeon 34122 (KR); SEOL, Jeong Soo, Daejeon 34122 (KR); HONG, Soohyung, Daejeon 34122 (KR); PARK, Keum Yong, Daejeon 34122 (KR); PARK, Jinhui, Daejeon 34122 (KR); YOON, Tae Gyun, Daejeon 34122 (KR); LEE, Bumhyuk, Daejeon 34122 (KR); PARK, Uijun, Daejeon 34122 (KR)
(74) Representative: Plasseraud IP
(86) International application number: PCT/KR2024/009672
(87) International publication number: WO 2025/018672

(57) **Abstract**

An apparatus for cleaning a press roll that presses an electrode according one embodiment of the present disclosure includes a cleaning member that brings a cleaning cloth into contact with the surface of the press roll, and a cleaning cloth which cleans the press roll while passing between the press roll and the cleaning member, wherein the cleaning member can supply a cleaning liquid to the cleaning cloth.

## Description

### [TECHNICAL FIELD]

### Cross Citation with Related Application(s)

This application claims priority from and the benefit of Korean Patent Application No. 10-2023-0091884 filed on July 14, 2023 and Korean Patent Application No. 10-2024-0089059 filed on July 5, 2024 in the Korean Intellectual Property Office, the disclosures of which are incorporated herein by reference in their entirety.

The present disclosure relate to an apparatus for cleaning a press roll, and more particularly, to a cleaning apparatus with an improved cleaning liquid supply system during cleaning of the press roll.

### [BACKGROUND]

In modern society, as portable devices such as a mobile phone, a notebook computer, a camcorder and a digital camera, and an energy storage system(ESS) have been daily used, technologies of a field related thereto has been actively developed. In addition, as a secondary battery capable of being charged and discharged is used as a power source for an electric vehicle (EV), a hybrid electric vehicle(HEV), a plug-in hybrid electric vehicle (P-HEV) and the like as a method for solving air pollution and the like caused by existing gasoline vehicles using fossil fuel, a necessity for the development of the secondary battery is increasing.

Currently commercialized secondary batteries include a nickel cadmium battery, a nickel hydrogen battery, a nickel zinc battery, a lithium secondary battery, and the like, and among these batteries, the lithium secondary battery has come into the spotlight because it has advantages, for example, being freely charged and discharged, and having very low self-discharge rate and high energy density.

Such a lithium secondary battery primarily uses lithium-based oxide and a carbon material as a positive electrode active material and a negative electrode active material respectively. The lithium secondary battery includes an electrode assembly in which a positive electrode plate and a negative electrode plate respectively coated with the positive electrode active material and the negative electrode active material are arranged with a separator interposed between them, and an exterior material, i.e., battery case, which hermetically houses the electrode assembly together with an electrolyte.

Such secondary batteries are widely used in not only small devices such as portable electronic devices, but also medium- and large-scale devices such as electric vehicles and energy storage systems(ESS), and the use frequency thereof is rapidly increasing. Furthermore, in recent years, there is an increasing tendency to use residential battery packs for the purpose of storing electricity.

The manufacturing process of such a lithium secondary battery is roughly classified into an electrode process, an assembly process, and a formation process. The electrode process may be divided into an active material mixing process, an electrode coating process, a pressing process, a slitting process, a winding process, and the like. Among them, the pressing process is a process of passing an electrode substrate after the coating process between a pair of press rolls heated to a high temperature to press it to a desired thickness, in order to reduce the thickness of the electrode substrate, thereby increasing the capacity density and increasing the adhesion between the electrode current collector and the electrode active material.

In such a pressing process, if active materials or other foreign substances remaining after pressing adhere to the rolls during pressing while the repeated pressing proceeds, the foreign substances may adhere to the electrode in the subsequent pressing process, thereby reducing the quality of the electrode and the battery including the same. Therefore, a press roll cleaning apparatus is used to remove contamination of press rolls.

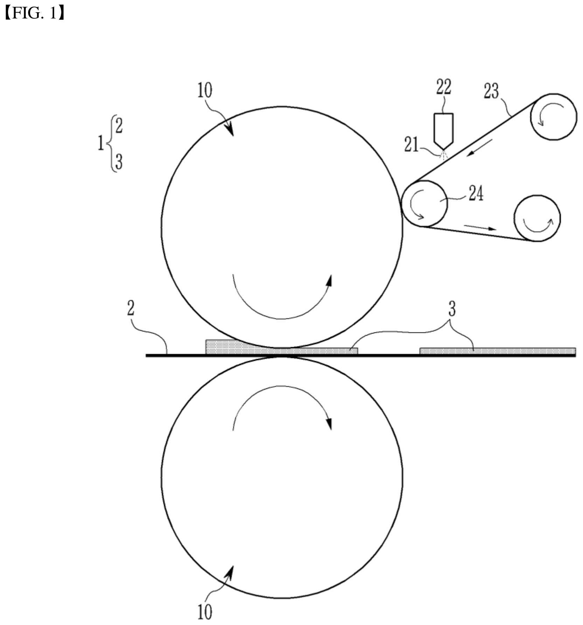

FIG. 1 shows a conventional press roll cleaning apparatus used in a pressing process. An electrode substrate 1, in which an electrode mixture layer 3 is coated onto a current collector 2, passes between a pair of press rolls 10. The electrode mixture layer 3 includes an electrode active material, a conductive material, and a binder.

In a conventional press roll cleaning apparatus 20, a method is used in which a cleaning liquid 21 is sprayed onto a cleaning cloth 23 via a nozzle 22 (e.g., a spray-type nozzle) during the process of operating press rolls 10 to manufacture electrodes, and the press rolls 10 are wiped with a cleaning cloth 23 sprayed with the cleaning liquid while the cleaning cloth 23 passes the cleaning roller 24.

In this case, when the press rolls are cleaned during the process of manufacturing the electrode 1 while the press rolls 10 are operated, the type and use amount of cleaning liquid 21 are limited in order to maintain the amount of residual moisture in the electrode 1, and an oil-based cleaning liquid having an oil component is mainly used.

Meanwhile, due to the characteristics of the electrode process, a period of time when the press rolls 10 are not operated occurs. At this time, the cleaning liquid 21 sprayed onto the cleaning cloth 23 may evaporates/dry, and the press rolls 10 are not properly cleaned, and for various other reasons, there is a need to further diversify the method of supplying the cleaning liquid 21.

### [DETAILED DESCRIPTION OF THE INVENTION]

### [Technical Problem]

It is an object of the present disclosure to provide a cleaning apparatus with an improved cleaning liquid supply system during cleaning of the press roll.

However, the problem to be solved by embodiments of the present disclosure is not limited to the above-described problems, and can be variously expanded within the scope of the technical idea included in the present disclosure.

### [Technical Solution]

According to an embodiment of the present disclosure, there is provided an apparatus for cleaning a press roll that presses an electrode, the apparatus comprising: a cleaning member that brings a cleaning cloth into contact with the surface of the press roll; and a cleaning cloth which cleans the press roll while passing between the press roll and the cleaning member, wherein the cleaning member can supply a cleaning liquid to the cleaning cloth.

The cleaning member may comprise a main body with which the cleaning cloth is brought into contact; and a cleaning liquid supply hole provided on the surface of the main body and capable of supplying the cleaning liquid.

The cleaning liquid supply holes may be provided in plural numbers, and the plurality of the cleaning liquid supply holes may be arranged at a portion of the cleaning member along the width direction of the cleaning member.

The plurality of the cleaning liquid supply holes may be respectively arranged at prescribed constant intervals.

The plurality of the cleaning liquid supply holes may be arranged in a line along the width direction of the cleaning member.

The apparatus for cleaning a press roll further comprises a cleaning liquid supply unit that supplies the cleaning liquid directly to the cleaning cloth, wherein the cleaning liquid supply unit is arranged at the front end of the cleaning member on the basis of the advancing direction of the cleaning cloth, and the cleaning liquid may be supplied to the cleaning cloth from at least one of the cleaning member and the cleaning liquid supply unit.

The cleaning liquid may be supplied to the cleaning cloth from the cleaning liquid supply unit, and the cleaning liquid may be replenished to the cleaning cloth from the cleaning member.

The cleaning liquid is supplied from the cleaning liquid supply unit during the operation period of the press roll, and immediately after the operation of the press roll is stopped and then the operation is resumed, the cleaning liquid may be supplied to the cleaning cloth from the cleaning member for a prescribed period of time.

The types or components of the cleaning liquid supplied to the cleaning cloth from the cleaning liquid supply unit and the cleaning liquid supplied to the cleaning cloth from the cleaning member may be identical.

The types or components of the cleaning liquid supplied to the cleaning cloth from the cleaning liquid supply unit and the cleaning liquid supplied to the cleaning cloth from the cleaning member may be different.

The cleaning liquid supply unit comprises a nozzle that sprays the cleaning liquid onto the cleaning cloth, and may spray the cleaning liquid onto a surface on the opposite side of the surface where the cleaning cloth is directed toward the press roll.

The nozzle that sprays the cleaning liquid may include a single-fluid nozzle.

The apparatus for cleaning a press roll may comprise a suction unit that sucks the cleaning liquid supplied from the cleaning liquid supply unit and flying on the opposite side of the cleaning liquid supply unit on the basis of the cleaning cloth.

The apparatus for cleaning a press roll further comprises a housing that houses the cleaning liquid supply unit inside, wherein the cleaning cloth may pass through the housing, and the housing is provided with a suction unit.

The apparatus for cleaning a press roll may comprise a cleaning liquid storage unit capable of storing the cleaning liquid in the inside of the cleaning member.

The cleaning member may further comprise an inlet port through which the cleaning liquid flows, and a pipe or tube may be connected to the inlet port to supply the cleaning liquid to the inside of the cleaning member.

The apparatus for cleaning a press roll may further comprise: a cleaning cloth supply unit that supplies the cleaning cloth, and a cleaning cloth recovery unit that recovers the cleaning cloth.

The cleaning cloth supply unit may unwind the cleaning cloth wound in a roll type, and the cleaning cloth recovery unit may wind the cleaning cloth that has passed the cleaning member.

The apparatus for cleaning a press roll further comprises a housing that houses components of the apparatus for cleaning a press roll, wherein the surface of the housing toward the press roll includes an opening part, and the cleaning cloth may be exposed through the opening part and brought into contact with the press roll.

The apparatus for cleaning a press roll may further comprise a sensing unit that senses the degree of tilting of the cleaning member or the degree of deflection of the cleaning cloth that passes the cleaning member.

### [Advantageous Effects]

According to the present disclosure, since a cleaning liquid supply system is diversified during the cleaning of a press roll, it is possible to maximize the cleaning efficiency of the press roll and the efficiency of the electrode producing process resulting therefrom, and also improve the quality of the electrode produced in the pressing process and the battery cell including the same.

The effects of the present disclosure are not limited to the effects mentioned above and additional other effects not described above will be clearly understood from the detailed description of the appended claims by those skilled in the art.

### [BRIEF DESCRIPTION OF THE DRAWINGS]

FIG. 1 shows a conventional press roll cleaning apparatus used in a pressing process.
FIG. 2 is a schematic diagram of a press roll cleaning apparatus according to an embodiment of the present disclosure.
FIG. 3 shows an illustrative example of a cleaning member, which is one constituent element of the press roll cleaning apparatus of FIG. 2.
FIG. 4 is a cross-sectional view of the cleaning member of FIG. 3 taken along line A-A.
FIG. 5 illustrates a case where a press roll is cleaned by the cleaning member of FIG. 2.
FIG. 6 shows an embodiment in which the cleaning members of FIGS. 3 to 5 are partially modified.
FIG. 7 shows another embodiment in which the press roll cleaning apparatus of FIG. 2 is modified.
FIG. 8 shows yet another embodiment in which the press roll cleaning apparatus of FIG. 2 is modified.
FIG. 9 shows an illustrative embodiment of a housing for preventing scattering of the cleaning liquid of FIG. 8.
FIG. 10 shows yet another embodiment in which the press roll cleaning apparatus of FIG. 2 is modified as a combination of the embodiments of FIGS. 7 and 8.
FIG. 11 shows another embodiment in which the press roll cleaning apparatus of FIG. 2 is modified.
FIG. 12 shows another embodiment in which the press roll cleaning apparatus of FIG. 2 is modified.
FIG 13 shows an embodiment of the press roll cleaning apparatus described above in FIGS. 2 to 12.

### [DETAILED DESCRIPTION OF THE EMBODIMENTS]

Hereinafter, various embodiments of the present disclosure will be described in detail with reference to the accompanying drawings so that those skilled in the art can easily implement them. The present disclosure may be modified in various different ways, and is not limited to the embodiments set forth herein.

Portions that are irrelevant to the description will be omitted to clearly describe the present disclosure, and like reference numerals designate like elements throughout the specification.

Further, in the figures, the size and thickness of each element are arbitrarily illustrated for convenience of description, and the present disclosure is not necessarily limited to those illustrated in the figures. In the figures, the thickness of layers, regions, etc. are exaggerated for clarity. In the figures, for convenience of description, the thicknesses of some layers and regions are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means disposed on or below a reference portion, and does not necessarily mean being disposed on the upper end of the reference portion toward the opposite direction of gravity.

Further, throughout the specification, when a portion is referred to as "including" a certain component, it means that the portion can further include other components, without excluding the other components, unless otherwise stated.

Further, throughout the specification, when referred to as "planar", it means when a target portion is viewed from the upper side, and when referred to as "cross-sectional", it means when a target portion is viewed from the side of a cross section cut vertically.

Below, exemplary embodiments of the present disclosure will be described with reference to the accompanying drawings.

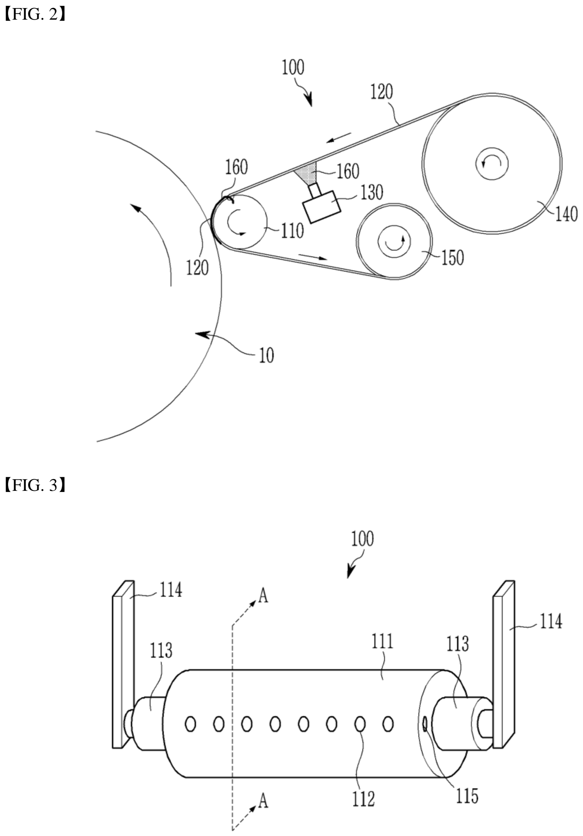

FIG. 2 is a schematic diagram of a press roll cleaning apparatus according to an embodiment of the present disclosure.

A press roll cleaning apparatus 100 according to an embodiment of the present disclosure roughly includes a cleaning member 110, a cleaning cloth 120, and a cleaning liquid supply unit 130. As will be described below, a cleaning liquid 160 can be supplied even through the cleaning member 110.

Since the cleaning member 110 must first remove foreign substances adhered to the surface of the press roll 10 after pressing the electrode 1 by the press roll 10, it is located closest to the point where the press roll 10 presses the electrode on the basis of the rotation direction of the press roll 10. The cleaning member 110 may be, for example, in the shape of a cleaning roll (roller), and when the contact portion between the cleaning member 110 and the press roll 10 is rounded, it is possible to prevent the press roll 10 from being damaged by the cleaning cloth 120 when the cleaning cloth 120 and the press roll 10 are brought into contact with each other. For example, the cleaning member 110 may rotate in a direction opposite to the rotation direction of the press roll 10.

The present disclosure is not limited to those shown in the figure, and any structure and shape in which the cleaning cloth 120 can be supplied to the cleaning member 110 to clean the surface of the press roll 10 is sufficient, and can be variously modified and changed so as to adapt to the environment to which the present disclosure is applied. In addition, one cleaning member 110 may be provided as shown in the schematic diagram of FIG. 2, but the number of the cleaning members 110 is not particularly limited.

Meanwhile, according to embodiments of the present disclosure, the cleaning liquid 160 inside the cleaning member 110 can be supplied to the cleaning cloth 120 through a cleaning liquid supply hole 112 (see FIG. 3) provided on the surface of the cleaning member 110. The method by which the cleaning liquid 160 is supplied to the cleaning cloth 120 via the cleaning member 110 will be described later with reference to FIG. 3, etc.

The cleaning cloth 120 is supplied from the cleaning cloth supply unit 140 and transferred to the cleaning member 110. For example, the cleaning cloth supply unit 140 may be configured to wind a sheet-shaped long cleaning cloth 120 in a roll shape, and the cleaning cloth 120 unwound from the cleaning cloth supply unit 140 may be transferred to the cleaning member 110. The cleaning member 110 is adjacent to the surface of the press roll 10, so that one surface of the cleaning cloth 120 may be brought into contact with the press roll 10. That is, the cleaning cloth 120 is brought into contact with the press roll 10 while passing between the press roll 10 and the cleaning member 110, thereby cleaning the press roll 10.

The cleaning cloth 120 that has passed the cleaning member 110 is recovered by the cleaning cloth recovery unit 150. For example, the cleaning cloth recovery unit 150 may be configured to wind the cleaning cloth 120 in a roll shape. In other words, the cleaning cloth supply unit 140 and the cleaning cloth recovery unit 150 may be respectively fabricated, for example, in the shape of a cylindrical bar or bobbin, to unwind and wind the cleaning cloth 120. The cleaning member 110 may rotate simultaneously in accordance with the moving direction of the cleaning cloth 120, and the cleaning cloth supply unit 140 and the cleaning cloth recovery unit 150 may also rotate in the same manner.

In addition, the press roll 10 in the embodiment of FIG. 2 corresponds to the upper press roll 10 among a pair of press rolls arranged up and down. The electrode 1 (see FIG. 1) passes under the upper press roll 10 of FIG. 2. On the basis of the electrode 1, the cleaning cloth supply unit 140 is located further outward than the cleaning cloth recovery unit 150. When explaining the upper press roll 10 of FIG. 2 as an example, the cleaning cloth supply unit 140 is located higher than the cleaning cloth recovery unit 150.

The cleaning cloth 120 can smoothly absorb or remove foreign substances adhering to the press roll 10, and the type thereof is not limited as long as it does not damage the surface of the press roll 10. For example, a non-woven fabric can be used. In addition, as long as the material of the non-woven fabric can absorb or remove foreign substances, the type thereof is not limited, and cotton fiber, polyethylene fiber, polypropylene fiber, polyester, aramid fiber, cellulose fiber, rayon fiber, or a non-woven fabric mixed with these can be used.

The press roll cleaning apparatus 100 according to an embodiment of the present disclosure can supply a cleaning liquid 160 through the cleaning liquid supply unit 130, and can also supply a cleaning liquid 160 even through the cleaning member 110. That is, supplying the cleaning liquid 160 to the cleaning cloth 120 from the cleaning liquid supply unit 130 and supplying the cleaning liquid 160 to the cleaning cloth 120 from the cleaning member 110 in contact with the cleaning cloth 120 are performed separately. The cleaning liquid 160 may be supplied from any one selected from the cleaning liquid supply unit 130 and the cleaning member 110 in accordance with the process environment in which the present disclosure is realized, or the cleaning liquid 160 may be supplied from both the cleaning liquid supply unit 130 and the cleaning member 110. The cleaning liquid 160 supplied from the cleaning solution supply unit 130 and the cleaning liquid 160 supplied from the cleaning member 110 may be cleaning liquids of identical types and/or components, or in some cases, may be cleaning liquids of different types and/or components, in accordance with the process environment in which the present disclosure is realized.

The cleaning liquid supply unit 130 may be arranged at the front end of the cleaning member 110 on the basis of the advancing direction of the cleaning cloth 120. When the cleaning members 110 are provided in plural numbers, a cleaning liquid supply unit 130 may be further arranged between respective cleaning members 110.

The cleaning liquid supply unit 130 may be, for example, configured to directly spray the cleaning liquid 160 onto the cleaning cloth 120 by a nozzle or spray method as shown in FIG. 2, but various modifications and changes are possible, for example, the cleaning liquid 160 may be evenly dropped across the entire area of the cleaning cloth 120 (for example, across the width direction), and the cleaning liquid supply unit 130 may be immersed in the cleaning liquid 160 to absorb the cleaning liquid 160 while the cleaning cloth 120 passes the cleaning liquid supply unit 130. If the cleaning liquid supply unit 130 is a spray type, it may include, for example, a single-fluid nozzle and/or a two-fluid nozzle. If a single-fluid nozzle is adopted in the cleaning liquid supply unit 130, the scattering of the cleaning liquid 160 can be prevented more effectively than when a two-fluid nozzle is used.

The cleaning liquid supply unit 130 can supply (spray) the cleaning liquid 160 onto the surface on the opposite side of a surface where the cleaning cloth 120 is directed toward the press roll 10 (a surface where the cleaning cloth 120 is brought into contact with the press roll 10) as shown in FIG. 2. In this case, when the cleaning cloth 120 supplied with the cleaning liquid 160 is brought into contact with the press roll 10, the cleaning liquid 160 can be prevented from dripping as liquid leakage or the like onto the electrode 1. In addition, although not shown in detail in FIG. 2, the cleaning liquid supply unit 130 includes a cleaning liquid storage tank, a cleaning liquid transfer pipe, a pump, a valve, a pump, and/or a nozzle, etc., and various modifications and changes may be made to the structure, shape, number, etc. of the detailed components of the cleaning liquid supply unit 130 as so to adapt to the environment in which the present disclosure is realized. A suction unit (not shown) that can suck up a cleaning liquid 160 that is sprayed or leaked in the form of mist may be further provided around the cleaning liquid supply unit 130.

When explaining the upper press roll 10 of FIG. 2 as an example, the cleaning cloth supply unit 140 is located higher than the cleaning cloth recovery unit 150 as described above. Furthermore, the cleaning liquid supply unit 130 supplies (sprays) the cleaning liquid 130 onto a surface on the opposite side of the surface where the cleaning cloth 120 is directed toward the press roll 10 (a surface where the cleaning cloth 120 is brought into contact with the press roll 10). This significantly reduces the concern that the cleaning liquid 160 will remain on the surface of the press roll 10.

Additionally, in the opposite case, assuming the case where the cleaning liquid supply unit 130 sprays the cleaning liquid 130 onto a surface where the cleaning cloth 120 is directed toward the press roll 10, there is a concern that the cleaning liquid 130 may be scattered up to the press roll 10. Alternatively, the cleaning cloth 120 moves from the cleaning cloth supply unit 140 located relatively higher to the cleaning cloth recovery unit 150 located relatively lower, and therefore, if the cleaning liquid 160 is supplied to an outer surface of the cleaning cloth 120 (i.e., a surface that is brought into contact with the press roll 10), there is a concern that the cleaning liquid 160 may flow down along the surface of the cleaning cloth 120 toward the press roll 10. In both cases, the cleaning liquid 130 remains on the surface of the press roll 10, which may may affect the electrode pressing quality.

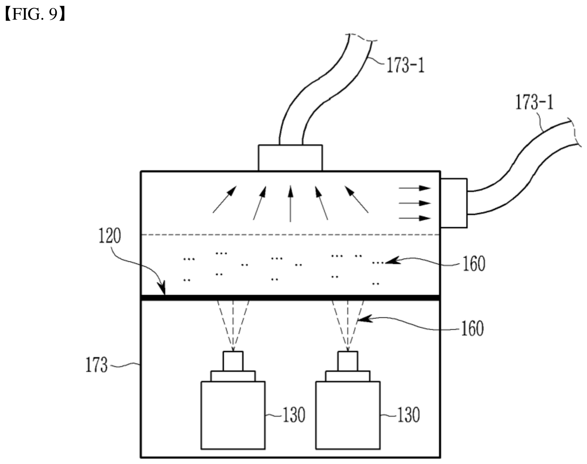

Further, when the cleaning liquid supply unit 130 is located on a surface on the opposite side of a surface where the cleaning cloth 120 is directed toward the press roll 10, there is an advantage in that it may be easier to install a discharge pipe, etc., connected to a second housing 173 (see FIG. 9) for preventing the scattering of the cleaning liquid 130, which is a relatively larger facility.

Further, the cleaning liquid supply unit 130 may also be provided in plural numbers. For example, a cleaning liquid supply unit that supplies water or a water-based cleaning liquid and a cleaning liquid supply unit that supplies an oil-based cleaning liquid may be provided, respectively.

FIG. 2 shows a case where the cleaning liquid supply unit 130 is arranged on a rear surface of the cleaning cloth 120 to supply the cleaning liquid 160 to the cleaning cloth 120. However, the present disclosure is not limited thereto, and the cleaning liquid supply unit 130 may be arranged on a front surface or on both the front and rear surfaces of the cleaning cloth 120. That is, it is sufficient if the cleaning liquid 160 can be supplied to an extent that the press roll 10 can be cleaned by the cleaning cloth 120, and various modifications and variations are possible. Here, the front surface of the cleaning cloth 120 means a surface that is brought into contact with the press roll 10, and the rear surface of the cleaning cloth 120 means a surface on the opposite side of the surface that is brought into contact with the press roll 10.

Meanwhile, according to the present disclosure, the cleaning liquid 160 can also be supplied to the cleaning cloth 120 even through the cleaning member 110. For this purpose, an additional cleaning liquid supply unit (not shown) for supplying the cleaning liquid 160 to the cleaning member 110 may be separately provided outside the cleaning member 110 and connected to a pipe/tube, etc., to supply the cleaning liquid 160 to the cleaning member 110. However, the present disclosure is not limited thereto, and is intended to cover various modifications and changes, for example, an additional cleaning liquid supply unit (not shown) for supplying the cleaning liquid 160 to the cleaning member 110 may be integrally provided inside or outside the cleaning member 110.

In the pressing process, there are cases where the operation of the press roll 10 is stopped periodically or nonperiodically. In this case, if the non-operation period becomes longer, the cleaning liquid 160 already supplied by the cleaning liquid supply unit 130 may evaporate or dry in the cleaning cloth 120. Accordingly, the cleaning liquid 160 is evaporated or dried by the cleaning cloth 120 in the section from the cleaning liquid supply unit 130 to the cleaning member 110, which makes it difficult to clean the press roll 10.

Subsequently, when the press roll 10 is restarted, if contamination or foreign substances occur on the press roll 10 in the time period during which the cleaning cloth 120 of the corresponding section (section from the cleaning liquid supply unit 130 to the cleaning member 110) passes the cleaning member 110, the possibility that a defect occurs in the electrode 1 pressed by the corresponding press roll 10 is increased.

If the cleaning liquid 160 supplied from the cleaning liquid supply unit 130 is arranged and sprayed close to the press roll 10, the cleaning liquid 160 in the form of mist may be brought into contact with the electrode 1 passing the press roll 10, which may affect the quality of the electrode 1. To prevent this, the cleaning liquid supply unit 130 may be arranged at a considerable distance from the press roll 10. Alternatively, in accordance with the size/dimension of the process equipment, the cleaning liquid supply unit 130 may be arranged at a considerable distance from the press roll 10.

In this case, when the cleaning liquid 160 in the cleaning cloth 120 of a large section from the cleaning liquid supply unit 130 to the cleaning member 110 is evaporated or dried, and then the press roll 10 is restarted, it may be impossible to clean the press roll 10 for a corresponding considerable period of time.

In some cases, in addition to the above-mentioned cases, even if the cleaning liquid 160 supplied from the cleaning liquid supply unit 130 is not completely evaporated or dried in the cleaning cloth 120 when it reaches the cleaning member 110 and some of it remains in a liquid (or gel) state, it may not be able to sufficiently clean the press roll 10 by the cleaning liquid 160 remaining in a liquid state in the cleaning cloth 120.

Thus, the cleaning liquid 160 is supplied from the cleaning liquid supply unit 130 during the operation period of the press roll 10, and immediately after the operation of the press roll 10 is stopped and then the operation is resumed, the cleaning liquid 160 is supplied to the cleaning cloth 120 from the cleaning member 110 for a prescribed period of time, so that the cleaning work of the press roll 10 can be performed normally immediately after operation of the press roll 10.

Alternatively, in some cases, even if the cleaning liquid 160 supplied from the cleaning liquid supply unit 130 remains in a liquid state in the cleaning cloth 120 in such a degree to sufficiently clean the press roll 10 when it reaches the cleaning member 110, it may be necessary to further supply a cleaning liquid 160 of different types and/or components to the cleaning cloth 120 for special purposes or the like.

Alternatively, in some cases, even during a time period when the cleaning liquid supply unit 130 cannot supply the cleaning liquid 160 to the cleaning cloth 120 in order to inspect or replace the cleaning liquid supply unit 130, the press roll 10 may need to be cleaned simultaneously while continuously operating the press roll 10.

It is more advantageous to apply a method of supplying the cleaning liquid 160 from the cleaning member 110 immediately after the pressing process is stopped and then resumed.

In order to deal with the above-mentioned cases or other various cases, the cleaning liquid 160 can be supplied to the cleaning cloth 120 from the cleaning member 110. Alternatively, the cleaning liquid 160 may be supplied to the cleaning cloth 120 solely from the cleaning member 110 without the cleaning liquid supply unit 130.

It is preferable that the cleaning liquid 160 in the cleaning member 110 uses an oil-based cleaning liquid. This is because it is arranged close to the press roll 10. However, when the pressing process is stopped for cleaning the press roll 10 and the press roll 10 is cleaned using a water-based cleaning liquid, the cleaning member 110 using an oil-based cleaning liquid can be replaced with a cleaning member 110 using a water-based cleaning liquid to perform the cleaning.

It is preferable that the cleaning liquid 160 supplied from the cleaning liquid supply unit 130 uses an oil-based cleaning liquid during the pressing process. However, when the pressing process is stopped for cleaning the press roll 10 and the press roll 10 is cleaned using a water-based cleaning liquid, the cleaning liquid can be supplied from the cleaning liquid supply unit 130 to clean the press roll 10.

In addition to the above-mentioned cases, it is, of course, possible to use an oil-based cleaning liquid even when the pressing process is stopped for cleaning the press roll 10.

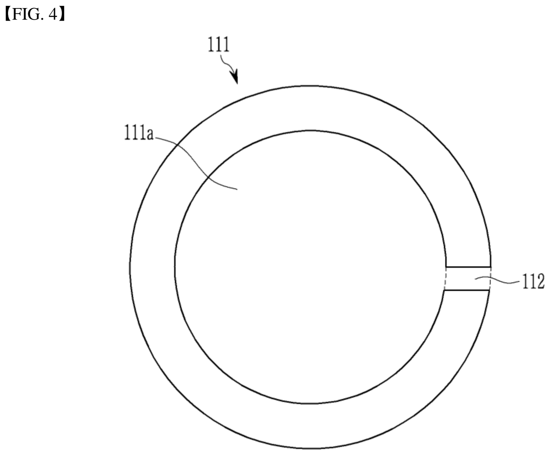

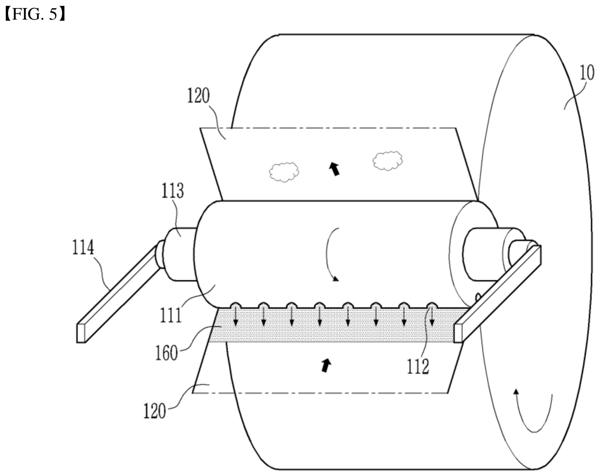

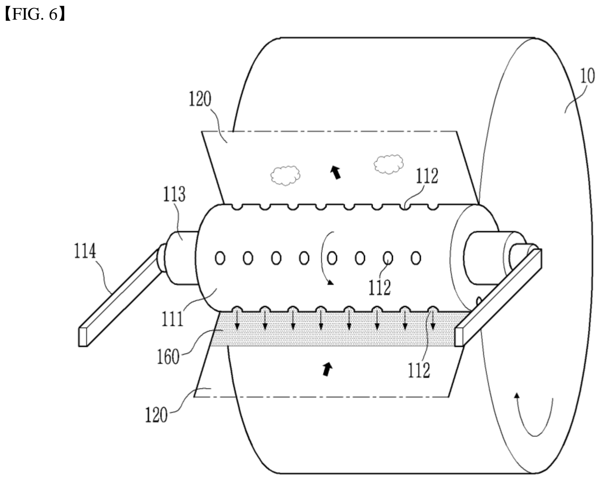

FIG. 3 shows an illustrative example of a cleaning member, which is one constituent element of the press roll cleaning apparatus of FIG. 2. FIG. 4 is a cross-sectional view of the cleaning member of FIG. 3 taken along line A-A. FIG. 5 illustrates a case where a press roll is cleaned by the cleaning member of FIG. 2. FIG. 6 shows an embodiment in which the cleaning members of FIGS. 3 to 5 are partially modified.

FIG. 3 shows, as an example, a case where the cleaning member 110 is in the shape of a cylindrical cleaning roll (roller). The cleaning member 110 according to an embodiment of the present disclosure includes a main body 111 and a cleaning liquid supply hole 112 provided on the surface of the main body 111. The main body 111 may have, for example, a cylindrical shape, a tube shape, or a cylinder shape, but the present disclosure is not limited thereto.

The shape, number, and arrangement of the cleaning liquid supply holes 112 are not limited to those illustrated in the present disclosure, and are sufficient if they can evenly supply the cleaning liquid 160 so as to be able to clean the press roll 10. The cleaning liquid supply holes 112 may be provided in plural numbers. The plurality of the cleaning liquid supply holes 112 may be arranged at prescribed constant intervals. The plurality of the cleaning liquid supply holes 112 may be arranged in a line along the width direction in a portion of the cleaning member 110, or may be arranged in a zigzag manner. In some cases, the plurality of the cleaning liquid supply holes 112 may be arranged in a line in each of plural columns as shown in FIG. 6. Alternatively, various modifications and changes are possible, for example, the cleaning liquid supply holes 112 may be formed as holes of a fine size and evenly distributed over the entire area of the cleaning member 110.

In some cases, a cleaning liquid supply nozzle (not shown) may be further provided in each cleaning liquid supply hole 112 to spray the cleaning liquid 160 at a prescribed time interval. In this case, the cleaning liquid supply nozzle may not protrude outward from the surface of the main body 111 so as not to damage the surface of the press roll 10.

As shown in FIG. 4, an empty space may be provided as a cleaning liquid storage unit 111a inside the cleaning member 110, and the cleaning liquid 160 may be stored in the space.

The cleaning member 110 may include a shaft 113 on both sides of the main body 111 as an axis for supporting the cleaning member 110 and enabling the cleaning member 110 to be rotated. Further, a support member 114 may be coupled to both sides of the main body 111 via the shaft 113 or directly to the main body 111.

The cleaning member 110 may also include an inlet port 115 for supplying a cleaning liquid 160 to the inside. A pipe or tube (not shown) is connected between the inlet port 115 and a cleaning liquid supply unit (not shown) for supplying a cleaning liquid 160 to the cleaning member 110, so that the cleaning liquid 160 can be continuously supplied to the inside of the cleaning member 110 during the cleaning operation. Alternatively, the cleaning liquid 160 may be supplied to the inside of the cleaning member 110 and then the inlet port 115 may be closed during the cleaning operation. The position, shape, and structure of the inlet port 115 are not limited to those shown in the figure, and are sufficient if they are any position, shape, and structure that can supply the cleaning liquid 160 to the inside of the cleaning member 110.

As shown in FIG. 5, a cleaning member 110 is positioned on the surface of the press roll 10, and a cleaning cloth 120 moves toward the cleaning member 110 and passes between the cleaning member 110 and the press roll 10. In this case, the cleaning liquid 160 inside the cleaning member 110 can be supplied to the cleaning cloth 120 through the cleaning liquid supply hole 112 of the cleaning member 110.

When a plurality of cleaning liquid supply holes 112 are arranged in plural columns as shown in FIG. 6, the cleaning member 110 can supply the cleaning liquid 160 continuously or in small amounts at short time intervals, in order to prevent the cleaning liquid 160 from leaking from the cleaning liquid supply holes 112 of columns other than the cleaning liquid supply hole 112 of the column that touches the cleaning cloth 120.

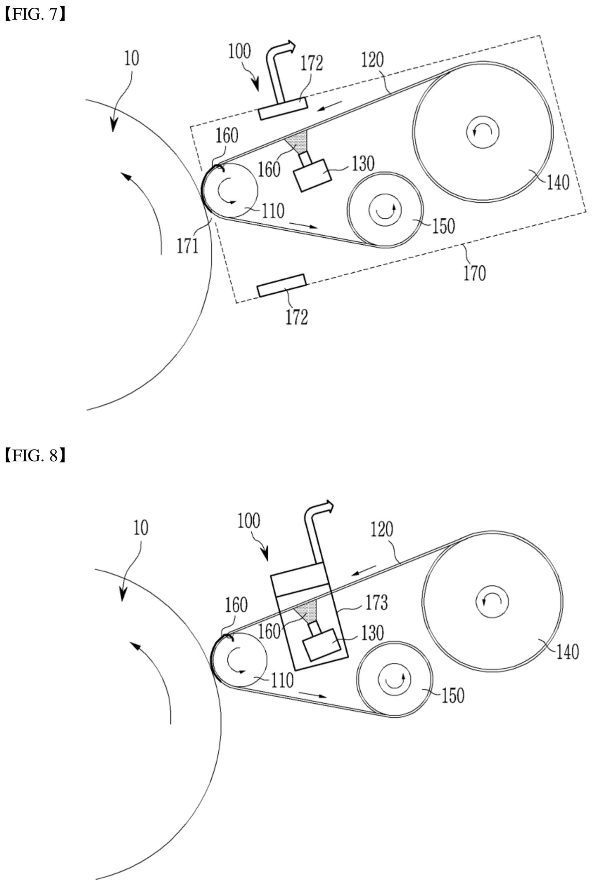

FIG. 7 shows another embodiment in which the press roll cleaning apparatus of FIG. 2 is modified. As shown in FIG. 7, the cleaning member 110, the cleaning liquid supply unit 130, the cleaning cloth supply unit 140, and the cleaning cloth recovery unit 150, which are the components of the press roll cleaning apparatus 100, can be housed in a first housing 170. The front surface of the first housing 170 toward the press roll 10 includes an opening part 171, and through the opening part 171, the whole or a part of the cleaning member 110 and the cleaning cloth 120 passing the cleaning member 110 are exposed and can be brought into contact with the press roll 10.

The first housing 170 may be further provided with a suction unit 172 that suctions the cleaning liquid 160 that is scattered or leaked in the form of mist. The position, structure, and shape of the suction unit 172 are not limited to those illustrated in the present disclosure. A discharge pipe (not shown) for the cleaning liquid 160 is connected to the suction unit 172.

FIG. 8 shows yet another embodiment in which the press roll cleaning apparatus of FIG. 2 is modified. FIG. 9 is a partial enlarged view of FIG. 8. In the embodiment of FIG. 8, the second housing 173 houses the cleaning liquid supply unit 130, and unlike the embodiment of FIG. 7, the cleaning member 110, the cleaning cloth supply unit 140, and the cleaning cloth recovery unit 150 are not housed. The cleaning liquid supply unit 130 is housed in the second housing 173, and the cleaning liquid 160 is supplied from the cleaning liquid supply unit 130 to the cleaning cloth 120 passing through the second housing 173.

As described above in FIG. 2, the cleaning liquid 160 is supplied from the cleaning liquid supply unit 130 to a surface on the opposite side of the surface where the cleaning cloth 120 touches the press roll 10. Further, referring to FIG. 9, the cleaning liquid 160 supplied to the cleaning cloth 120 may be scattered, and the scattered cleaning liquid 160 does not touch the press roll 10 located outside the second housing 173, but is discharged to the outside through the suction unit 173-1 located on the upper part of the second housing 173. The suction unit 173-1 may include a pipe. If the cleaning liquid supply unit 130 is located on the opposite side of the surface where the cleaning cloth 120 touches the press roll 10, the suction unit 173-1 for sucking the scattered cleaning liquid 160 can be located on the outside, which makes it easier to install the press roll cleaning apparatus 100.

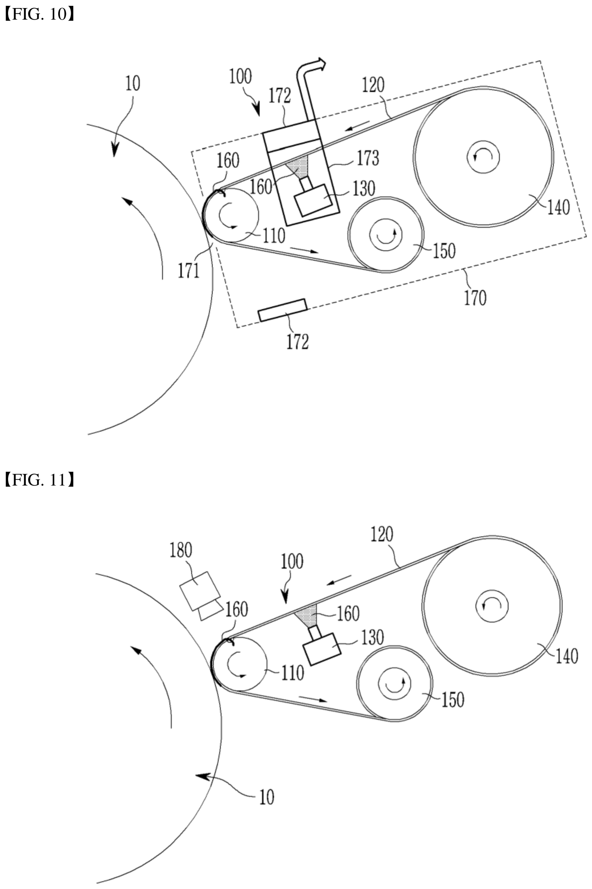

FIG. 10 shows yet another embodiment in which the press roll cleaning apparatus of FIG. 2 is modified as a combination of the embodiments of FIGS. 7 and 8. The second housing 173 can be housed inside the first housing 170, and the description of the other first housing 170 overlaps with those described above in FIG. 7, and the description of the second housing 173 overlaps with those described above in FIGS. 8 and 9, so refer to the description of the corresponding portion.

FIG. 11 shows another embodiment in which the press roll cleaning apparatus of FIG. 2 is modified. The press roll cleaning apparatus 100 of FIG. 11 further includes a sensing unit 180. The sensing unit 180 is positioned near the cleaning member 110 and can sense the degree to which the cleaning member 110 is tilted. Alternatively or additionally, it can sense the degree of tilting of the cleaning cloth 120 passing the cleaning member 110.

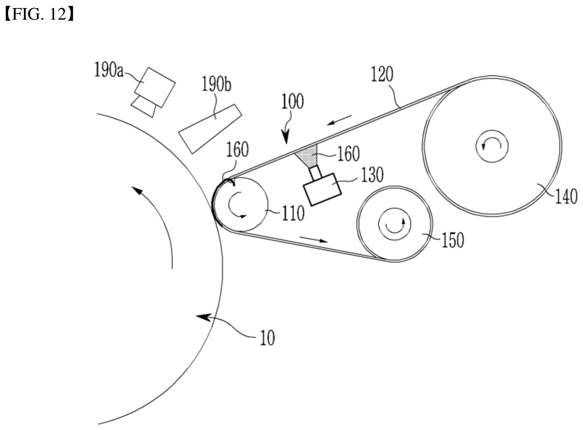

FIG. 12 shows another embodiment in which the press roll cleaning apparatus of FIG. 2 is modified. The press roll cleaning apparatus 100 of FIG. 12 may further include an inspection unit 190a and/or a drying unit 190b.

The inspection unit 190a measures the brightness value of the surface of the press roll 10. The surface of the press roll 10 can be sensed as a whole, that is, the half of the outer circumferential surface of the cylindrical press roll 10 on which the inspection unit 190a is located can be sensed, thereby calculating the brightness value. In FIG. 12, one inspection unit 190a is shown for convenience, but the present disclosure is not limited thereto, and two inspection units 190a can be arranged to face each other on both sides of the press roll 10, so that the inspection units 190a on both sides can sense each half of the press roll 10 to calculate the brightness value.

Alternatively, the inspection unit 190a may scan while moving along the length or circumference of the cylindrical press roll 10, or may scan while moving spirally around the outer circumferential surface of the cylindrical press roll 10, thereby enabling various modifications and changes.

Optionally, the inspection unit 190a may further determine a portion having a particularly low brightness value compared to the surrounding portion as a foreign substance, thereby detecting the foreign substance.

The drying unit 190b dries the surface of the press roll 10 that has been cleaned with a cleaning liquid. The drying unit 190b serves to dry the surface of the press roll 10 by heating and/or blowing air. Foreign substances can be dried and removed from the surface of the roll by heating and/or blowing air, and residual foreign substances in liquid form can be removed by evaporating them by heating and/or blowing air. The drying unit 190b may be a heater type that directly applies heat to the surface of the press roll 10, or may be a hot air drying type that applies hot air, etc. to the surface of the press roll 10.

In addition, the press roll cleaning apparatus 100 further includes a control unit (not shown) that controls each component, such as the cleaning member 110, the cleaning liquid supply unit 130, the inspection unit 190a, and the drying unit 190b. The control unit receives input of data from the inspection unit 190a or controls whether the cleaning member 110, the cleaning liquid supply unit 130, and the drying unit 190b operate according to a preset control algorithm.

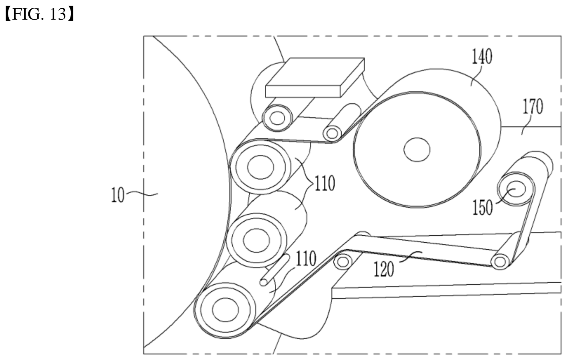

FIG 13 shows an embodiment of the press roll cleaning apparatus described above in FIGS. 2 to 12. The cleaning member 110 may be provided in plural numbers (e.g., three numbers) and arranged in a line along the surface of the press roll 10. FIG. 13 shows an illustrative example in which the cleaning member 110, the cleaning cloth 120, the cleaning cloth supply unit 140, and the cleaning cloth recovery unit 150 are housed in a housing 170. For the convenience of understanding of the components housed inside the housing 170, the housing 170 is shown in outline. The housing 170 may be modified or changed and fabricated so as to adapt to various environments in which the present disclosure is realized. In addition, other components are omitted from the illustration of FIG. 13 for convenience, and reference is made to those described above in FIGS. 2 to 12.

The type of the cleaning liquid 160 is not limited as long as it can smoothly remove foreign substances, etc. In accordance with the environment in which the present disclosure is realized (e.g., whether the electrode pressing process is in progress or whether the electrode pressing process is stopped or completed), an aqueous cleaning liquid may be used, an oil-based cleaning liquid may be used, or a combination of these may be used.

For example, the cleaning fluid may be water, acetone, dimethyl carbonate, dimethyl formamide, N-methyl formamide, sulfolane(tetrahydrothiophene-1,1-dioxide), 3-methylsulfolane, N-butyl sulfone, dimethyl sulfoxide, pyrrolidinone(HEP), dimethylpiperidine(DMPD), N-methyl pyrrolidone(NMP), N-methyl acetamide, dimethyl acetamide(DMAc), dimethylformamide(DMF), diethylacetamide(DEAc), dipropylacetamide(DPAc), ethanol, propanol, butanol, hexanol, ethylene glycol, tetrachloroethylene, propylene glycol, toluene, turpentine, methyl acetate, ethyl acetate, petroleum ether, cresol, glycerol, and like.

When the press roll cleaning apparatus 100 according to the present disclosure is applied during a non-operational state of the press roll 10, a water-based cleaning liquid may be used as the cleaning liquid 160, and specifically, at least one selected from the group including water or an alcohol-based compound may be used.

More specifically, the cleaning liquid 160 may be a mixture of water and an alcohol-based compound, and the alcohol-based compound may be at least one selected from the group comprising: ethanol, propanol, butanol, pentanol, hexanol, isopropanol, heptanol, decanol, octanol, isodecanol, ethylene glycol, diethylene glycol, triethylene glycol, ethylene glycol methyl ether, diethylene glycol methyl ether, triethylene glycol methyl ether, ethylene glycol ethyl ether, diethylene glycol ethyl ether, triethylene glycol ethyl ether, ethylene glycol monopropyl ether, diethylene glycol monopropyl ether, triethylene glycol monopropyl ether, ethylene glycol monobutyl ether, ethylene glycol monohexyl ether, diethylene glycol monohexyl ether, and triethylene glycol monohexyl ether. More preferably, the alcohol-based compound may be at least one selected from the group comprising pentanol, hexanol, heptanol, octanol, and decanol.

The cleaning liquid 160 may contain acetone in an amount of 10 to 40 wt.%, or 20 to 30 wt.%, or 30 wt.% based on the total weight of the cleaning liquid. Similarly, in the cleaning liquid, water may be contained in an amount of 60 to 90 wt.%, or 70 to 80 wt.%, or 70 wt.% based on the total weight of the cleaning liquid.

Meanwhile, the embodiments described above in FIGS. 2 to 13 may be realized separately, but may also be realized in various combinations. In addition, the press roll 10 may be provided with a pair of rolls 10 facing each other, whereby the press roll cleaning apparatus 100 may also be provided by at least one for each press roll 10.

Although the preferred embodiments of the present disclosure have been described in detail above, the scope of the present disclosure is not limited thereto, and various modifications and improvements of those skilled in the art using the basic concepts of the present disclosure defined in the following claims also belong to the scope of rights.

### [DESCRIPTION OF REFERENCE NUMERALS]

10: press roll
100: press roll cleaning apparatus
110: cleaning member
111: main body
112: cleaning liquid supply hole
113: shaft
114: support member
115: inlet port
120: cleaning cloth
130: cleaning liquid supply unit
140: cleaning cloth supply unit
150: cleaning cloth recovery unit
160: cleaning liquid
170: housing
180: sensing unit
190a: inspection unit
190b: drying unit

## Claims

1. An apparatus for cleaning a press roll that presses an electrode, the apparatus comprising:
a cleaning member that brings a cleaning cloth into contact with the surface of the press roll; and
a cleaning cloth which cleans the press roll while passing between the press roll and the cleaning member,
wherein the cleaning member can supply a cleaning liquid to the cleaning cloth.

2. The apparatus for cleaning a press roll according to claim 1, wherein:
the cleaning member comprises:
a main body with which the cleaning cloth is brought into contact; and
a cleaning liquid supply hole provided on the surface of the main body and capable of supplying the cleaning liquid.

3. The apparatus for cleaning a press roll according to claim 2, wherein:
the cleaning liquid supply holes are provided in plural numbers, and
the plurality of the cleaning liquid supply holes are arranged at a portion of the cleaning member along the width direction of the cleaning member.

4. The apparatus for cleaning a press roll according to claim 3, wherein:
the plurality of the cleaning liquid supply holes are respectively arranged at prescribed constant intervals.

5. The apparatus for cleaning a press roll according to claim 3, wherein:
the plurality of the cleaning liquid supply holes are arranged in a line along the width direction of the cleaning member.

6. The apparatus for cleaning a press roll according to claim 1,
further comprising a cleaning liquid supply unit that supplies the cleaning liquid directly to the cleaning cloth,
wherein the cleaning liquid supply unit is arranged at a front end of the cleaning member on the basis of an advancing direction of the cleaning cloth, and the cleaning liquid is supplied to the cleaning cloth from at least one of the cleaning member and the cleaning liquid supply unit.

7. The apparatus for cleaning a press roll according to claim 6, wherein:
the cleaning liquid is supplied to the cleaning cloth from the cleaning liquid supply unit, and the cleaning liquid is replenished to the cleaning cloth from the cleaning member.

8. The apparatus for cleaning a press roll according to claim 7, wherein:
the cleaning liquid is supplied from the cleaning liquid supply unit during an operation period of the press roll, and immediately after the operation of the press roll is stopped and then the operation is resumed, the cleaning liquid is supplied to the cleaning cloth from the cleaning member for a prescribed period of time.

9. The apparatus for cleaning a press roll according to claim 6, wherein:
the types or components of the cleaning liquid supplied to the cleaning cloth from the cleaning liquid supply unit and the cleaning liquid supplied to the cleaning cloth from the cleaning member are identical.

10. The apparatus for cleaning a press roll according to claim 6, wherein:
the types or components of the cleaning liquid supplied to the cleaning cloth from the cleaning liquid supply unit and the cleaning liquid supplied to the cleaning cloth from the cleaning member are different.

11. The apparatus for cleaning a press roll according to claim 6, wherein:
the cleaning liquid supply unit comprises a nozzle that sprays the cleaning liquid onto the cleaning cloth, and sprays the cleaning liquid onto a surface on an opposite side of a surface where the cleaning cloth is directed toward the press roll.

12. The apparatus for cleaning a press roll according to claim 11, wherein:
the nozzle that sprays the cleaning liquid includes a single-fluid nozzle.

13. The apparatus for cleaning a press roll according to claim 11, wherein:
the apparatus comprises a suction unit that sucks the cleaning liquid supplied from the cleaning liquid supply unit and flying on an opposite side of the cleaning liquid supply unit on the basis of the cleaning cloth.

14. The apparatus for cleaning a press roll according to claim 13,
further comprising a housing that houses the cleaning liquid supply unit inside,
wherein the cleaning cloth passes through the housing, and the housing is provided with a suction unit.

15. The apparatus for cleaning a press roll according to claim 1, wherein:
the apparatus comprises a cleaning liquid storage unit capable of storing the cleaning liquid in the inside of the cleaning member.

16. The apparatus for cleaning a press roll according to claim 15, wherein:
the cleaning member further comprises an inlet port through which the cleaning liquid flows, and
a pipe or tube is connected to the inlet port to supply the cleaning liquid to the inside of the cleaning member.

17. The apparatus for cleaning a press roll according to claim 1, further comprising:
a cleaning cloth supply unit that supplies the cleaning cloth; and
a cleaning cloth recovery unit that recovers the cleaning cloth.

18. The apparatus for cleaning a press roll according to claim 17, wherein:
the cleaning cloth supply unit unwinds the cleaning cloth wound in a roll type, and
the cleaning cloth recovery unit winds the cleaning cloth that has passed the cleaning member.

19. The apparatus for cleaning a press roll according to claim 18,
further comprising a housing that houses components of the apparatus for cleaning a press roll,
wherein a surface of the housing toward the press roll includes an opening part, and
wherein the cleaning cloth is exposed through the opening part and brought into contact with the press roll.

20. The apparatus for cleaning a press roll according to claim 1,
further comprising a sensing unit that senses the degree of tilting of the cleaning member or the degree of deflection of the cleaning cloth that passes the cleaning member.
